# EUROPEAN PATENT SPECIFICATION

(11) **EP 4 713 649 B1**
(45) Date of publication and mention of the grant of the patent: **18.11.2026**
(21) Application number: 24766039.2
(22) Date of filing: 06.09.2024
(51) Int. Cl.: G01M 11/00

(54) **CONFIGURING AN OPTICAL SYSTEM**
KONFIGURATION EINES OPTISCHEN SYSTEMS
CONFIGURATION D'UN SYSTÈME OPTIQUE

(30) Priority: 02.08.2024 EP 24382874
(43) Date of publication of application: 25.03.2026
(73) Proprietor: Das-Nano Tech, S.L., 31192 Tajonar (ES)
(72) Inventor: SUBIZA GARCÍA, Mikel, 31192 Tajonar (ES); PERCAZ CIRIZA, Jon Mikel, 31192 Tajonar (ES); MARTÍNEZ DE MORENTIN SUESCUN, Cristian, 31192 Tajonar (ES); INÉS ORTIGOSA, Andrea, 31192 Tajonar (ES); MIRANDA SANTAFÉ, Luis, 31192 Tajonar (ES); TABOADA CABELLOS, Elena, 31192 Tajonar (ES); AZANZA LADRÓN, Eduardo, 31620 Gorriaz (ES); LUMBRERAS SÁDABA, Carlos, 31192 Tajonar (ES); RUBIO LAMANA, Adrián, 31192 Tajonar (ES); PABOLLETA MARTORELL, Asier, 31192 Tajonar (ES); UZQUEDA ESTEBAN, Itziar, 31192 Tajonar (ES); RAZQUIN SOLA, Mikel, 31192 Tajonar (ES); HUARTE ZOZALLA, Aitor, 31192 Tajonar (ES); ARNEDO GIL, Israel, 31192 Tajonar (ES)
(74) Representative: ZBM Patents - Zea, Barlocci & Markvardsen
(86) International application number: PCT/EP2024/074987
(87) International publication number: WO 2026/027065

(56) References cited:
- WO-A1-2024/027938
- US-B2- 7 379 646
- BOBRUK TOMASZ: "CHROMATIC DISPERSION COMPENSATION IN EXISTING FIBER OPTIC TELECOMMUNICATION LINES WITH THE GROWING BIT RATES NEEDS OF DWDM SYSTEM", INFORMATICS CONTROL MEASUREMENT IN ECONOMY AND ENVIRONMENT PROTECTION, vol. 11, no. 4, 20 December 2021 (2021-12-20), pages 38 - 41, XP093269014, ISSN: 2083-0157, Retrieved from the Internet <URL:https://ph.pollub.pl/index.php/iapgos/article/download/2805/2555> DOI: 10.35784/iapgos.2805

## Description

This application claims the benefit of European Patent Application EP24382874.6 filed 02 August 2024.

The present disclosure relates to methods of configuring an optical device including a standardized optical pulse generator and an endpoint connected with each other by a candidate optical fiber line, and to systems suitable for performing said methods.

### BACKGROUND

Optical systems (or devices or apparatuses) are known including optical fiber lines or connections to transmit optical pulses between different components of the optical system (or device or apparatus). Optical pulses are normally transmitted from a producer thereof to a consumer thereof through optical fiber. Optical systems may be used in a diversity of applications, in which components forming the optical system need to be accurately integrated with each other to ensure that whole optical system performs or operates correctly.

A known approach to ensure such a precise integration includes manufacturing or adjusting the producer of optical pulses with a pre-compensator to make or cause that optical pulses are generated properly, i.e., in such a manner that correct operation of whole optical system is guaranteed. Pre-compensation module is thus configured or adjusted in order to ensure and maintain operational consistency between constituent elements of the optical system.

Such a manner of (re)configuring optical systems may generate operative inefficiencies when, e.g., any of the components of the optical system has/have to be replaced because, as commented before, the optical pulse producer may need to be accordingly adjusted. In this case, e.g., manufacturing line may require to be stopped until the optical pulse producer has been adjusted or (re)configured. Said customization of the pulse generator may imply that incompatibilities between pre-compensating module and other components of the optical system can lead to interoperability issues, resulting in system downtime and increased maintenance costs. Resolving interoperability issues may require troubleshooting, reconfiguration, or replacement of components, leading to additional effort and material costs. An example of a method and a corresponding system for configuring an optical system comprising a pulse generator and an optical fiber line is disclosed in document WO2024/027938A1.

Such a customization of the pulse generator may further imply that inconsistent adjustments in the optical system can result in suboptimal system performance and/or potential degradation. In addition to operative disadvantages, such a kind of operations may be costly and inefficient because they may imply, e.g., design, production and testing extra-costs, delayed lead times which may delay project timelines and involve opportunity costs and potential penalties for missed deadlines, etc.

An object of this disclosure is to provide a method, according to claim 1, and a system, according to claim 13, aimed at improving prior art manners of configuring or reconfiguring optical systems including an optical pulse generator and an endpoint connected with each other by an optical fiber line.

### SUMMARY

According to claim 1, method steps are provided of configuring an optical system including a standardized optical pulse generator and an endpoint connected with each other by a candidate optical fiber line belonging to a designated optical fiber fabrication batch, the candidate optical fiber line having candidate dispersion parameters. A reference optical fiber line is known to cause or make that optical pulses generated by the standardized optical pulse generator and transmitted over the reference optical fiber line reach the endpoint fulfilling predefined pulse specs required by the endpoint to operate correctly, the reference optical fiber line having reference dispersion parameters and a reference length. Optical dispersion of any optical fiber path depends on its dispersion parameters whose effects accumulate over its length, said dispersion parameters being variable within fabrication tolerance range due to unavoidable manufacturing imperfections and, therefore, depending on which optical fiber fabrication batch said optical fiber path belongs to, said variability potentially causing non-fulfilment of the predefined pulse specs.

Such method steps of claim 1 comprise determining a length for the candidate optical fiber line that causes or makes that optical pulses generated by the standardized optical pulse generator and transmitted over the candidate optical fiber line reach the endpoint fulfilling the predefined pulse specs. Said configuring methods further comprise configuring the optical system by implementing the candidate optical fiber line either with one optical fiber segment or several optical fiber segments belonging to the designated optical fiber fabrication batch. If only one optical fiber segment is used, it is sized with the previously determined length. Otherwise, if several optical fiber segments are used, their connection with each other in series has the previously determined length.

These configuring steps permit overcoming the drawbacks commented above in the background section. A key aspect of this solution is that the optical pulse generator in the optical system corresponds to a standardized optical pulse generator and that adjustments to compensate for optical fiber dispersion variability are exclusively made on the optical fiber line. In other words, the optical pulse generator in the optical system belongs to a type of standardized optical pulse generators that are operationally standard or operationally identical, in the sense that optical pulses generated fulfil always same predefined output requirements or predefined pulse specs. Thus, the proposed solution solely relies on adjusting the optical fiber line to make that optical pulses arrive at the endpoint fulfilling predefined pulse specs, said fulfilling ensuring correct operation of the endpoint and, therefore, of the whole optical system.

Optical system to be configured comprises a standardized optical pulse generator configured/manufactured to generate standardized optical pulses and to pre-compensate for optical dispersion accumulated during transmission of the generated optical pulses through a reference optical fiber, which belongs to a reference optical fiber fabrication batch. Such a pre-compensation is performed in order to comply with the endpoint predefined pulse specs/requirements that makes the endpoint to operate correctly. The reference optical fiber line has a predefined reference length and reference dispersion parameters which, in combination with the standardized optical pulse generator, cause that optical pulses from the standardized optical pulse generator reach the endpoint correctly, i.e., fulfilling predefined pulse specs.

However, in "twin" implementations of the optical system, i.e., identical operationally, optical fiber line in said other/new "twin" optical system does not usually belong to the reference optical fiber fabrication batch since optical fiber in a fabrication batch is finite. Using optical pulse generator with pre-compensation customized to dispersion parameters of the reference optical fiber batch, along with optical fiber from a different optical fiber fabrication batch, will result in non-optimized optical pulses at the endpoint, i.e., unfulfilling the predefined pulse specs required by the endpoint to operate correctly.

Instead of such a prior art approach based on pre-compensator customization, configuring methods according to present disclosure only rely on determining proper length for the candidate optical fiber, so that said length causes that optical pulses generated by the standardized optical pulse generator and transmitted over the reference optical fiber line reach the endpoint fulfilling predefined pulse specs required by the endpoint to operate correctly.

No customization of the standardized optical pulse generator is thus required when, e.g., there is a need of replacing some of the components in the (existing) optical system or of mounting a new optical system with same operational performance as the optical (existing) system. If standardized optical pulse generator is to be replaced in existing optical system or to be included in new optical system, another instance thereof belonging to the type of standardized optical pulse generators may be used. Differently from prior art strategies, no dependency exists between the standardized optical pulse generator and the optical fiber fabrication batch from which the candidate optical fiber line is implemented. Therefore, if optical fiber line connecting the standardized optical pulse generator and the endpoint is to be replaced in existing optical system or to be included in new optical system, following two scenarios may occur.

In first scenario, if optical fiber from same or different optical fiber fabrication batch with attributed length (previously outputted by configuring method according to present disclosure) is available, optical fiber line to be replaced in existing optical system or to be included in new optical system may be in stock (i.e., already manufactured with its attributed length) or extracted from optical fiber fabrication batch to be manufactured with its attributed length.

In second scenario, optical fiber line to be replaced in existing optical system or to be included in new optical system may be extracted from a new optical fiber fabrication batch without attributed length. In this case, configuring method according to present disclosure may be performed to obtain attributed length for said other optical fiber fabrication batch, and the optical fiber line to be replaced in existing optical system or to be included in new optical system may be sized with the obtained attributed length. It is worth mentioning that this second scenario will only occur when there is no remaining fiber in any of the batches with attributed length. A good logistic/manufacturing procedure may prevent this scenario from occurring.

This manner of proceeding significantly minimizes downtime of production line (or part thereof) until existing optical system is repaired or new optical system is mounted. In general, such a manner of proceeding (thanks to configuring methods according to present disclosure) minimizes or significantly attenuates inefficiencies, maintenance and mounting costs, inconsistent adjustments, suboptimal performances, incompatibilities, interoperability issues, etc.

The optical pulses, which may correspond to laser pulses, may be short optical pulses or ultra-short optical pulses.

The candidate dispersion parameters and reference dispersion parameters may be or correspond to chromatic dispersion parameters.

Chromatic dispersion causes different wavelength components of an optical pulse to travel at different speeds. Through its various orders, this dispersion cumulatively broadens and distorts short optical pulses as they travel through the optical fiber line. First order dispersion stretches the pulse duration, reducing peak power and distorting the pulse shape. Higher-order dispersion causes asymmetry and chirping, where different parts of the pulse spectrum experience different delays. Other challenges associated with the transmission of short optical pulses are the Polarization Mode Dispersion, nonlinear effects, power loss timing jitter etc. The optical fiber length plays a significant role in affecting these parameters. The effect of chromatic dispersion accumulates with optical fiber length, making it harder to maintain short pulse durations and other requirements at the endpoint input.

According to claim 1, the determining of the length for the candidate optical fiber line may include a dispersion determination step and a length calculation step. The dispersion determination step may include determining the candidate dispersion parameters by examining optical fiber from the designated optical fiber fabrication batch based on any known technique aimed at said purpose. Since said techniques are known, no details thereon are provided in present disclosure. The length calculation step may include calculating the length for the candidate optical fiber line depending on the reference length and the reference dispersion parameters and the determined candidate dispersion parameters. Indirect mode assumes that the reference dispersion parameters and the reference length are known because they belong to the reference optical fiber line, which have been experimentally proven to cause fulfilling of the predefined pulse specs and, therefore, it they are taken as a model to follow in configuring methods according to present disclosure.

The calculating of the length for the candidate optical fiber line may comprise calculating the length for the candidate optical fiber line based on following formula: $CL = RL ∗ RDP / CDP$ wherein: *CL* is the length to be calculated for the candidate optical fiber line, or simply candidate length; RL is the reference length; *RDP* is the first order reference dispersion parameters, typically in ps/(nm·km); and *CDP* is the first order candidate dispersion parameters previously determined, typically in ps/(nm·km).

Measuring the dispersion parameters of an optical fiber batch may thus permit ensuring optimal performance in applications requiring precise control of optical pulse features. Several techniques can be used to measure the dispersion parameters (mainly the chromatic dispersion) in optical fibers such as, e.g., by measuring the time delay and/or phase shift of different wavelengths traveling through optical fiber, using an interferometer etc. These are well-known techniques and, therefore, no details thereon are provided in present disclosure.

Still according to claim 1, the determining of the length for the candidate optical fiber line may include an initially establishing step and an adjusting step. The term "direct" refers to that elements of the optical system itself are used to determine the length for the candidate optical fiber line, namely: the standardized optical pulse generator, the endpoint and optical fiber from the designated optical fiber fabrication batch.

The initially establishing step may include initially establishing a working length within a discrete range of lengths around the reference length. The adjusting step may include adjusting the (previously initially established) working length by varying it within the discrete range of lengths until it is verified that optical pulses generated by the standardized optical pulse generator and transmitted over the candidate optical fiber line sized with the working length reach the endpoint fulfilling the predefined pulse specs (trial and error strategy).

Direct mode is advantageous in terms of, e.g., providing remarkable precision in determining the length for the candidate optical fiber line. Since direct mode is kind of experimental trial and error method with verification of whether fulfilment of predefined pulse specs is achieved or still not achieved, direct mode represents an accurate manner of adjusting/sizing the candidate optical fiber line towards fulfilment of predefined pulse specs.

The predefined pulse specs may include reference specs on pulse duration or pulse shape or pulse power or optical spectrum or any combination thereof. Measuring features of an optical pulse, such as its duration and shape, may require specialized equipment capable of capturing, if it is the case, the ultrafast nature of these optical pulses. For example, an autocorrelator may be employed which is one of the more widely used and simple methods and equipment for that purpose.

The verifying of whether optical pulses transmitted over the candidate optical fiber line sized with the working length reach the endpoint fulfilling the predefined pulse specs may be performed, in some examples, by verifying whether optical pulses transmitted over the candidate optical fiber line sized with the working length cause fulfilling of endpoint operational specs and, therefore, correct operation of the endpoint. That is, if the endpoint is proven to operate correctly, it is derived that optical pulses reach the endpoint fulfilling the predefined pulse specs. If, e.g., the endpoint is a radiation emitter, the emitted radiation may be checked instead of verifying the optical pulses driving the endpoint. This roundabout manner of verifying whether the optical pulses reach the endpoint fulfilling the predefined pulse specs may be very interesting if, e.g., verification of the endpoint's operation is easier, cheaper, less cumbersome, etc. than direct verification of the optical pulses. Flexibility is also provided by said roundabout approach since it represents a valuable alternative that may be adopted or not depending on circumstances in every scenario.

In some configurations, the optical system may further include another endpoint connected with the standardized optical pulse generator through another candidate optical fiber line, said other endpoint having same endpoint operational specs as the endpoint, and said other candidate optical fiber line also belonging to the designated optical fiber fabrication batch. The endpoint is an emitter endpoint (e.g. THz emitter) configured to emit, depending on optical pulses from the standardized optical pulse generator, an emitted radiation to be reflected onto or transmitted through an object to be inspected. The other endpoint is a receiver endpoint (e.g. THz receiver) configured to receive/sense, depending on optical pulses from the standardized optical pulse generator, a reflected/transmitted radiation caused by the reflection/transmission of the emitted radiation onto/through the object to be inspected.

In this technical context of the optical system, the verifying of whether optical pulses transmitted over the candidate optical fiber line sized with the working length cause fulfilling (by the endpoint) of endpoint operational specs may be performed by verifying whether the receiver endpoint senses the reflected/transmitted radiation correctly or as expected. In particular, such a verification may include verifying whether the receiver endpoint connected with the standardized optical pulse generator by the other candidate optical fiber line sized with the working length senses the reflected/transmitted radiation fulfilling predetermined sensing specs, which are known from previously performed sensing/s that has/have been confirmed as accurate and, therefore, as denoting correct operation of the emitter endpoint. The fulfilling of the predetermined sensing specs may be achieved in optimum mode or manner. This optimum mode may be aimed at not only achieving the fulfilling but the optimum or best fulfilling, i.e., at determining the working length (to be finally attributed to candidate optical fiber line) which optimizes or maximizes the fulfilling of the predetermined sensing specs. Trial and error strategy proposed herein may thus be combined with known optimization, maximization techniques to implement such an optimum mode.

Conceptually, if the receiver endpoint is proven to operate correctly, it is derived that the emitter endpoint operates correctly and, therefore, optical pulses reach the emitter endpoint fulfilling the predefined pulse specs. This particular roundabout manner of validating the fulfilling of the predefined pulse specs in dual optical systems with emitter and receiver may also be very valuable if, e.g., validation of signal sensed by the receiver is easier, cheaper, less cumbersome, etc. than direct verification of the optical pulses. Flexibility is thus also provided by this indirect validation approach.

These dual optical systems (with emitter and receiver) are the standard implementation for many applications such as, e.g., applications based on THz spectrometers. Optimizing signals received/sensed by the receiver necessarily implies optimizing the performance of the whole dual optical system. That is, if signals are sensed correctly by the receiver, it means that the emitter operates correctly and, accordingly, that optical pulses reach the emitter (and the receiver) correctly, i.e., fulfilling the predefined pulse specs and, therefore, that the whole optical system operates correctly.

Another very important advantage in terms of cost and simplicity comes from the fact that no additional equipment apart from the dual optical system itself is required. Moreover, a final verification of the length determined for the candidate optical fiber line, either via the direct mode or the indirect mode, may be performed by verifying whether the sensing performed by the receiver/sensor endpoint is correct or sufficiently accurate. Hence, this strategy based on validating receiver's sensing may be considered as the most or one of the most direct and efficient manner of calculating/validating the length for the candidate optical fiber line to ensure correct operation of the dual optical system.

The predetermined sensing specs may correspond to specs on temporal and frequency domain including, e.g., predetermined specs on signal to noise ratio or dynamic range or bandwidth or peak power or energy or any combination thereof which, as commented before, have been experimentally confirmed as accurate and, therefore, as denoting correct operation of the (emitter) endpoint and, accordingly, of the whole dual optical system. As previously indicated, the adjusting of the working length may be aimed at not only fulfilling predetermined sensing specs/values but at obtaining the best specs/values of the aformentioned sensing specs (optimum mode).

In examples, the adjusting of the working length may comprise determining, from previously performed adjustments on the working length, an adjusting trend or evolution indicating approaching to or moving away from the fulfilling of the predefined pulse specs. Then, this adjusting trend or evolution may be used to determine the (next) adjusting to be applied to the working length depending on said adjusting trend or evolution. This proposal of checking whether already determined adjustments of the working length follow a promising tendency towards the fulfilling of the predefined pulse specs provides rationality to configuring methods. This rationality may imply, e.g., a reduction in number of adjustments until definitive adjustment is derived and, hence, it makes configuring methods more efficient.

The above determining of the adjusting trend or evolution may include determining a magnitude trend or evolution indicating increasing or decreasing magnitude of the approaching or of the moving away. And, then, this magnitude trend or evolution may be used to determine magnitude of the (next) adjusting to be applied to the working length depending on said magnitude trend or evolution. This determination of whether previously determined adjustments of the working length follow a promising adjustment magnitude tendency towards the fulfilling of the predefined pulse specs provides a useful indicator of how good adjustment magnitudes are evolving and, therefore, said indicator may be used to derive next adjustment magnitude to be applied. This magnitude tendency and its use may permit, e.g., performing less adjustments until definitive adjustment of the working length is obtained, and this adds efficiency to configuring methods.

According to what is denominated herein kit-based approach, configuring methods may comprise using a kit of optical fiber patch cords of different lengths, each of them belonging to the designated optical fiber fabrication batch, and said different lengths or sums thereof conforming the discrete range of lengths. With this kit, the candidate optical fiber line may be sized with the working length to be tried (trial and error strategy) by selecting, from said kit of optical fiber patch cords, either one or several of said optical fiber patch cords satisfying a length condition. Said length condition may be or include either that the selected one optical fiber patch cord has length equal to or best approximating the working length to be tried, or that connection in series of the selected several optical fiber patch cords with each other has length equal to or best approximating the working length to be tried (trial and error strategy). Said kit-based approach using precut and pre-sized optical fiber patch cords is more efficient than, e.g., repeatedly cutting optical fiber and forming corresponding patch cords from the designated optical fiber fabrication batch and checking whether fulfilment of the predefined pulse specs is achieved with one or another of said optical fiber patch cords.

Fabrication batch refers to a large quantity of optical fiber produced under consistent conditions, typically encompassing many kilometres of fiber. Reel refers to a specific, manageable length of optical fiber wound onto a spool for practical use. Optical fiber properties within a fabrication batch are uniform, but different fabrication batches may have (unavoidable and commonly accepted) slight variations due to changes in production conditions or materials. Each fabrication batch of optical fiber produced may have slight differences in its dispersion features due to inherent variations in the manufacturing process. Such differences may include variations in, e.g., the drawing process, dopant concentration, fiber geometry, etc. Differences can also come from material inconsistencies (raw materials used to produce optical fiber can lead to differences in refractive index profile) and/or environmental conditions under which the optical fiber is manufactured and stored. Although manufacturers strive to keep these variations within specified tolerances, slight differences are inevitable. For example, for PM1550 fibers, the nominal value for the Chromatic Dispersion Parameter (D) might be specified as, for example, 18 ps/(nm·km) at 1550 nm, with a typical tolerance range of ±1 to ±2 ps/(nm·km). This means that different optical fiber reels could have dispersion values anywhere from 16 to 20 ps/(nm·km).

In implementations of what is denominated herein baseline-prolongations approach, the optical fiber patch cords in the aformentioned kit may comprise a baseline optical fiber patch cord and optical fiber prolongations. The baseline optical fiber patch cord may have a baseline length and each of the optical fiber prolongations may have a prolongation length, so that sums of the baseline length and the prolongation lengths conform the discrete range of lengths. With such baseline optical fiber patch cord and optical fiber prolongations, the candidate optical fiber line may be sized with the working length by selecting one or more of the optical fiber prolongations in such a way that connection of the selected optical fiber prolongations in series with each other and with the baseline optical fiber patch cord has a length equal to or best approximating the working length to be tried (trial and error strategy). Said baseline-prolongations approach based on baseline optical fiber patch cord covering most distance between standardized optical pulse generator and endpoint makes configuring methods cheaper and more efficient in terms of using smaller amounts of optical fiber. Baseline optical fiber is repeatedly extended with prolongations of different lengths (much shorter than the baseline optical fiber) until optimal or best length for the candidate optical fiber line is found.

In configuring methods according to what is herein denominated coarse-fine approach, the optical fiber prolongations in the kit comprise coarse prolongations and fine prolongations. Each of the coarse prolongations may have its coarse length and each of the fine prolongations may have its fine length, so that sums of the baseline length, the coarse lengths and the fine lengths conform the discrete range of lengths. The coarse lengths may form a series of lengths with a coarse distance between a coarse length and next coarse length in the series. The fine lengths may form a series of lengths with a fine distance between a fine length and next fine length in the series. The series of fine lengths may fall within or span an extent of the coarse distance. With such coarse prolongations and fine prolongations, the candidate optical fiber line may be sized with the working length by performing a coarse selecting or approximation step and a fine selecting or approximation step. The coarse selecting or approximation step may include selecting one of the coarse prolongations (in the kit) whose connection in series with the baseline optical fiber patch cord has length best approximating below the working length to be tried (trial and error strategy). The fine selecting or approximation step may include selecting one of the fine prolongations (in the kit) whose connection in series with the selected coarse prolongation and with the baseline optical fiber patch cord has length equal to or best approximating the working length to be tried (trial and error strategy). Said coarse-fine approach based on baseline optical fiber patch cord (covering most distance between standardized optical pulse generator and endpoint) and on repeatedly extending it firstly with coarse prolongations (coarse adjusting) and secondly with fine prolongations (fine adjusting) may make configuring methods cheaper, more efficient and more accurate. Efficiency may be in terms of using even smaller amounts of optical fiber in comparison to other manners of adjusting/sizing the working length without such coarse and fine adjustments. Accuracy may be in terms of more exactitude in determining the working length that causes best fulfilling of the predefined pulse specs.

Still with reference to the direct approach, the initially establishing of the working length may include a dispersion measuring step and an initializing step. The dispersion measuring step may include determining or measuring the candidate dispersion parameters by examining optical fiber from the designated optical fiber fabrication batch based on any known technique aimed at said purpose. The initializing step may include initially establishing the working length depending on the reference length and the reference dispersion parameters and the candidate dispersion parameters (determined in the dispersion measuring step). In particular examples, the initially establishing of the working length (in the initializing step) may be based on following formula: $WL = RL ∗ RDP / CDP$ wherein: *WL* is the working length to be initially established; RL is the reference length; *RDP* is the first order reference dispersion parameters, typically in ps/(nm·km); and *CDP* is the first order candidate dispersion parameters (determined in the dispersion measuring step).

In some examples, an intended application of the optical system (to be configured) may require a minimum length for the candidate optical fiber line, and the reference length may depend on said minimum length. In particular, the reference length may be the minimum length plus an extent of a difference interval within which a difference between the candidate optical fiber line's length and the reference length is estimated or expected to range in accordance with a factory dispersion tolerance in optical fiber manufacturing. For instance, if the intended application requires a minimum optical fiber length of 40m and estimated or expected difference between the lengths of the candidate and the reference optical fiber lines is ±1m, the reference length could be chosen to be 41m. Consequently, the discrete range of lengths may span from 40m to 42m, all of said lengths thus being longer than the minimum required length of 40m. It is therefore derived that the discrete range of lengths may be predetermined in said manner, e.g., with lower limit equal to the minimum length and upper limit equal to the minimum length plus twice an absolute value of estimated difference between the lengths of the candidate and the reference optical fiber lines. Such an estimated difference may be experimentally or theoretically derived from transmission features of both the candidate and the reference optical fiber lines.

Once determined, the length for the candidate optical fiber line may be attributed or assigned to the designated optical fiber fabrication batch or to reel or reels belonging to the designated optical fiber fabrication batch. This manner, any other candidate optical fiber line required to have same transmission performance as the candidate optical fiber line to cause fulfilling of the predefined pulse specs is implementable with optical fiber from the designated optical fiber fabrication batch according to single approach or to multiple approach. Single approach refers to implement the other candidate optical fiber with one optical fiber portion from the designated optical fiber fabrication batch and sized with the length attributed thereto (i.e., to the designated optical fiber fabrication batch). Multiple approach refers to implement the other candidate optical fiber with several optical fiber portions from the designated optical fiber fabrication batch and whose connection with each other in series has the length attributed thereto (i.e., to the designated optical fiber fabrication batch).

In some configurations, the optical system may additionally include a further endpoint connected with the standardized optical pulse generator through a further candidate optical fiber line. The further endpoint may have same endpoint operational specs as the endpoint. The further candidate optical fiber line may require same transmission performance as the candidate optical fiber line to cause fulfilling of the predefined pulse specs. In such a set-up, the configuring of the optical system may additionally include implementing the further candidate optical fiber line either with one optical fiber part or with several optical fiber parts belonging to the designated optical fiber fabrication batch. In the case of one optical fiber part, it may be sized with the length determined for the candidate optical fiber line. In the case of several optical fiber parts, their connection with each other in series may have the length determined for the candidate optical fiber line.

According to claim 13, a system is provided for configuring an optical system including a standardized optical pulse generator and an endpoint connected with each other by a candidate optical fiber line belonging to a designated optical fiber fabrication batch, the candidate optical fiber line having candidate dispersion parameters. A reference optical fiber line is known to cause or make that optical pulses generated by the standardized optical pulse generator and transmitted over the reference optical fiber line reach the endpoint fulfilling predefined pulse specs required by the endpoint to operate correctly, the reference optical fiber line having reference dispersion parameters and a reference length. Optical dispersion of any optical fiber path depends on its dispersion parameters whose effects accumulate over its length, said dispersion parameters being variable within fabrication tolerance range due to unavoidable manufacturing imperfections and, therefore, depending on which optical fiber fabrication batch said optical fiber path belongs to, said variability potentially causing non-fulfilment of the predefined pulse specs.

Such a system (aslo denominated configuring system herein) comprises a determiner tools kit and a configurator tools kit. The determiner tools kit may include tools usable by an operator of the system to determine a length for the candidate optical fiber line that causes or makes that optical pulses generated by the standardized optical pulse generator and transmitted over the candidate optical fiber line reach the endpoint fulfilling the predefined pulse specs. The configurator tools kit may include tools usable by the operator of the system to configure the optical system by implementing the candidate optical fiber line either with one optical fiber segment or with several optical fiber segments belonging to the designated optical fiber fabrication batch. The one optical fiber segment may be sized with the determined length (for the candidate optical fiber line). Otherwise, connection of the several optical fiber segments with each other in series may have the determined length (for the candidate optical fiber line).

Configuring systems are suitable to perform configuring methods proposed herein, so same or similar functional principles and advantages as the ones described with reference to configuring methods may be attributed to such configuring systems.

### BRIEF DESCRIPTION OF THE DRAWINGS

Non-limiting examples of the disclosure will be described in the following, with reference to the appended drawings, in which:
Figure 1 is a block diagram schematically illustrating systems for configuring an optical system according to examples.
Figure 2 is a schematic illustration of an optical system with associated optical pulses at generation by standardized optical pulse generator and at reception thereof by endpoint, according to examples.
Figure 3 is a flow chart schematically illustrating methods of configuring an optical system according to examples.
Figure 4 is a block diagram schematically illustrating a dual optical system to be configured by performing configuring methods according to examples, such as the ones according to Figure 3.

### DETAILED DESCRIPTION OF EXAMPLES

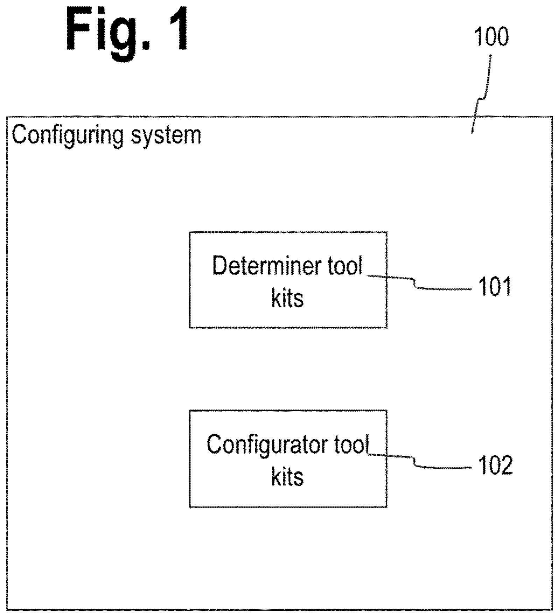

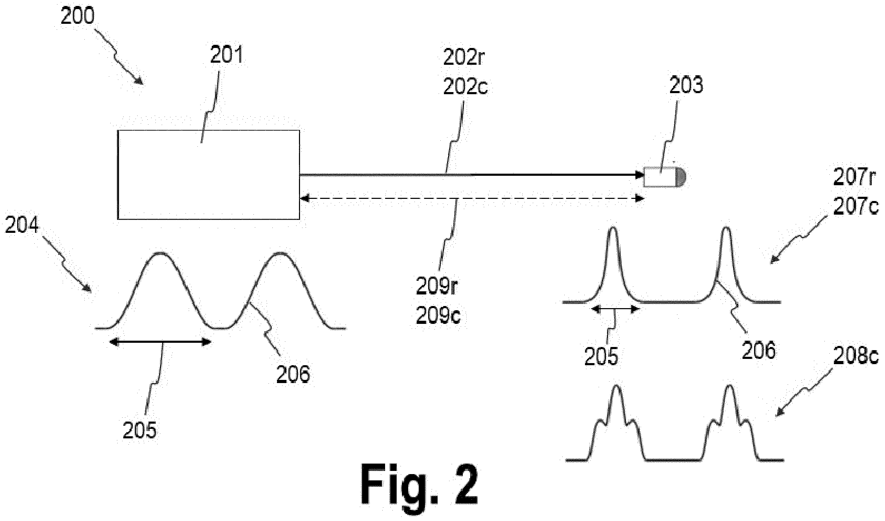

Figure 1 is a block diagram schematically illustrating systems for configuring an optical device (or system) according to examples. Figure 2 is a schematic illustration of an optical device (or system) with associated optical pulses at generation by standardized optical pulse generator and at reception thereof by endpoint, according to examples.

As illustrated in Figure 2, optical device 200 may comprise a standardized optical pulse generator 201 and an endpoint 203 connected with each other through a candidate optical fiber line 202c belonging to a designated optical fiber fabrication batch, the candidate optical fiber line 202c having candidate dispersion parameters and a candidate length 209c. The candidate dispersion parameters may correspond to chromatic dispersion parameters.

The term "standardized" may refer to that the standardized optical pulse generator 201 is a particular instance belonging to the type of standard optical pulse generators that are operationally or factory identical to each other. Operationally identical may refer to that the optical pulse generators belonging to the type of standard optical pulse generators have been fabricated to operate identically but they may be configurationally, structurally different. Factory identical may refer to that the optical pulse generators belonging to the type of standard optical pulse generators have been fabricated to operate identically and are also configurationally, structurally identical.

The endpoint 203 may belong to a type of endpoints that are operationally identical to each other, i.e., have been fabricated to operate identically to each other without necessarily being configurationally, structurally identical.

A reference optical fiber line 202r is known to cause or make that optical pulses 204 generated by the standardized optical pulse generator 201 and transmitted over the reference optical fiber line 202r reach the endpoint 203 fulfilling predefined pulse specs required by the endpoint 203 to operate correctly, the reference optical fiber line 202r having reference dispersion parameters and a reference length 209r. The reference dispersion parameters may correspond to chromatic dispersion parameters. The reference optical fiber line 202r may belong to a reference optical fiber fabrication batch.

Optical pulses 204 generated by the standardized optical pulse generator 201 may have features such as, e.g., pulse duration 205, pulse shape 206, pulse power and optical spectrum. The fulfilling of the predefined pulse specs may refer to that said features at the input of the endpoint 203 are within acceptability range or threshold and, therefore, they are sufficiently good or acceptable to make the endpoint 203 to operate correctly.

Transmission of the pulses 204 transmitted across the reference optical fiber line 202r may unavoidably suffer distortions due to, e.g., dispersion parameters of the reference optical fiber line 202r. In spite of these distortions, the optical pulses 204 reach the endpoint 203 fulfilling the predefined pulse specs 207r because the optical device 200 has been experimentally proven to operate correctly with the reference optical fiber line 202r sized with the reference length 209r. The standardized optical pulse generator 201 includes a pre-compensation module customized for the particular length 209r and dispersion parameters of the reference optical fiber line 202r. This pre-compensation module counteracts expected dispersion effects as optical pulses propagate through the reference optical fiber line 202r, thereby arriving at the endpoint 203 fulfilling the predefined pulse specs.

Transmission of the pulses 204 across the candidate optical fiber line 202c may unavoidably suffer distortions due to, e.g., dispersion parameters of the candidate optical fiber line 202c. These distortions may cause the optical pulses 204 to reach the endpoint 203 fulfilling the predefined pulse specs 207c or, otherwise, unfulfilling the predefined pulse specs 208c so that, in the former case 207c, the endpoint 203 operates correctly or, in the latter case 208c, the endpoint 203 operates incorrectly. One candidate length 209c or another may make the optical pulses 204 to reach the endpoint 203 fulfilling the predefined pulse specs 207c or unfulfilling the predefined pulse specs 208c.

Fulfilment of the predefined pulse specs by both optical pulses 207r, at endpoint 203 once transmitted over the reference optical fiber line 202r, and optical pulses 207c, at endpoint 203 once transmitted over the candidate optical fiber line 202c, is/are illustrated in Figure 2 with number references 207r and 207c pointing to same optical pulse waveform. That is, since both optical pulses 207r and 207c fulfil the predefined pulse specs, they are represented in the drawing by same optical pulse waveform.

Ideally, when a new optical fiber line with same targeted transmission performance as the reference optical fiber line 202r is to be installed in an optical system "twin" of the optical system 200, said new optical fiber line could be extracted from the reference optical fiber fabrication batch, in order to ensure the fulfilling of the predefined pulse specs 207r. In this case, said new optical fiber line could be sized with the reference length 209r because it is known that said length 209r will provide the new optical fiber line with transmission performance that give rise to the fulfilling of the predefined pulse specs 207r. However, optical fiber reels of same optical fiber fabrication batch are not infinite and, therefore, it is usual that the new optical fiber line has to be implemented with optical fiber from another optical fiber fabrication batch, e.g., candidate optical fiber fabrication batch.

Optical dispersion of any optical fiber path 202c, 202r depends on its dispersion parameters whose effects accumulate over its length 209c, 209r, said dispersion parameters being variable within fabrication tolerance range due to unavoidable manufacturing imperfections. This means that optical fibers 202c, 202r from different optical fiber fabrication batches usually have different dispersion parameters, and said difference or variability is a potential cause of non-fulfilment of the predefined pulse specs.

The above variability due to unavoidable manufacturing imperfections may refer to that even though different optical fibers 202r, 202c are manufactured theoretically under same manufacturing conditions, some divergence may arise due to inherent small manufacturing imperfections with (generally) accepted tolerances. These small imperfections, as commented in other parts of the description, may be compensated for by performing configuring methods according to present disclosure.

Since the reference optical fiber line 202r is known to cause that optical pulses 204 transmitted over the reference optical fiber line 202r reach the endpoint 203 fulfilling the predefined pulse specs 207r, if the candidate optical fiber line 202c belongs to an optical fiber fabrication batch different from the one of the reference optical fiber line 202r, the candidate optical fiber line 202c sized with the reference length 209r would transmit the optical pulses 204 without fulfilling the predefined pulse specs 207r, 207c at their arrival to the endpoint 203.

Prior art manners of solving the above problem are based on adjusting pre-compensation module in the optical pulse generator, thus resulting in a non-standardized optical pulse generator. This pre-compensation adjusting approach allows for fine-tuning to match the specific dispersion properties of the optical fiber line to be used. However, it obliges to keep detailed records and maintain consistency between pre-compensation settings of optical pulse generators customized to particular optical fiber fabrication batch and said optical fiber fabrication batch.

Opposed to prior art approaches based on adjusting pre-compensation module in non-standardized optical pulse generator, configuring methods according to present disclosure rely on (always same type of) standardized optical pulse generator 201 and properly sizing the candidate optical fiber line 202c (with candidate length 209c). This proper sizing is performed so that optical pulses 204 transmitted over the properly sized candidate optical fiber line 202c reach the endpoint 203 fulfilling the predefined pulse specs 207r, 207c.

As illustrated in Figure 1, configuration systems 100 may include a kit of determiner tools 101 and a kit of configurator tools 102. As commented in other parts of the description, configuring systems may be used to perform configuring methods in different modes or modalities or approaches. Since said approaches have been properly described in other parts of the disclosure, said descriptions are not repeated here.

Regarding the indirect approach, the kit of determiner tools 101 may comprise any known tool suitable for examining the candidate optical fiber line 202c and inferring or calculating its (chromatic) dispersion parameters. For example, the kit of determiner tools 101 may comprise a tool or tools to measure the time delay and/or phase shift of different wavelengths traveling through the candidate optical fiber line 202c to infer or calculate therefrom the (chromatic) dispersion of the candidate optical fiber line 202c. Additionally or alternatively, the kit of determiner tools 101 may comprise an interferometer to take measurements from beam(s) transmitted via the candidate optical fiber line 202c and to infer or calculate the (chromatic) dispersion of the candidate optical fiber line 202c from said measurements.

Still in relation to the indirect approach, the kit of determiner tools 101 may further comprise a computing device to calculate the candidate length 209c depending on the known reference length 209r and reference (chromatic) dispersion parameters and on the determined candidate (chromatic) dispersion. Since how said calculations may be performed has been properly described in other parts of the disclosure, said descriptions are not repeated here. This computing device may also be used to perform calculations in the determination of the (chromatic) dispersion or (chromatic) dispersion parameter of the candidate optical fiber line 202c.

In implementations according to the direct approach, the kit of determiner tools 101 may comprise the kit of optical fiber patch cords described in relation to any of the kit-based approach, baseline-prolongations approach and coarse-fine approach within the direct mode. Such descriptions of said kits of optical fiber patch cords and how they can be functionally used are not repeated here for reasons of redundancy avoidance.

The kit of determiner tools 101 may further comprise any known device suitable to examine optical pulses 207c, 208c at the endpoint 203 to check whether they fulfil the predefined pulse specs 207r or, otherwise, reach the endpoint 203 unacceptably distorted 208c. Measuring the features of optical pulses 207c, 208c, such as pulse duration 205 and pulse shape 206, may be performed using specialized equipment capable of capturing, e.g., an ultrafast nature of these pulses 207c, 208c. For example, an autocorrelator may be employed which may be considered one of the more widely used and simple methods and equipment for doing so.

The kit of determiner tools 101 may thus further comprise, in the direct mode or approach, such a specialized equipment including, e.g., an autocorrelator. The kit of determiner tools 101 may still further comprise, in the direct mode or approach, a computing device to perform calculations such as, e.g., those related to the adjusting trend or evolution and the magnitude trend or evolution described in other parts of the disclosure. Such descriptions of said determination of the adjusting and magnitude trend or evolutions and how they can be functionally used to perform configuration methods according to present disclosure are not repeated here for reasons of redundancy avoidance.

In the baseline-prolongations approach, the kit of determiner tools 101 may comprise the baseline optical fiber patch cord with baseline length and optical fiber prolongations each with prolongation length described in other parts of the disclosure in relation to said baseline-prolongations approach. Such descriptions of said baseline optical fiber and prolongations and how they can be functionally used are not repeated here for reasons of redundancy avoidance.

In the coarse-fine approach, the kit of determiner tools 101 may comprise the baseline optical fiber patch cord and the coarse and fine prolongations described in other parts of the disclosure in relation to said coarse-fine approach. Such descriptions of said the baseline optical fiber patch cord and coarse and fine prolongations and how they can be functionally used are not repeated here for reasons of redundancy avoidance.

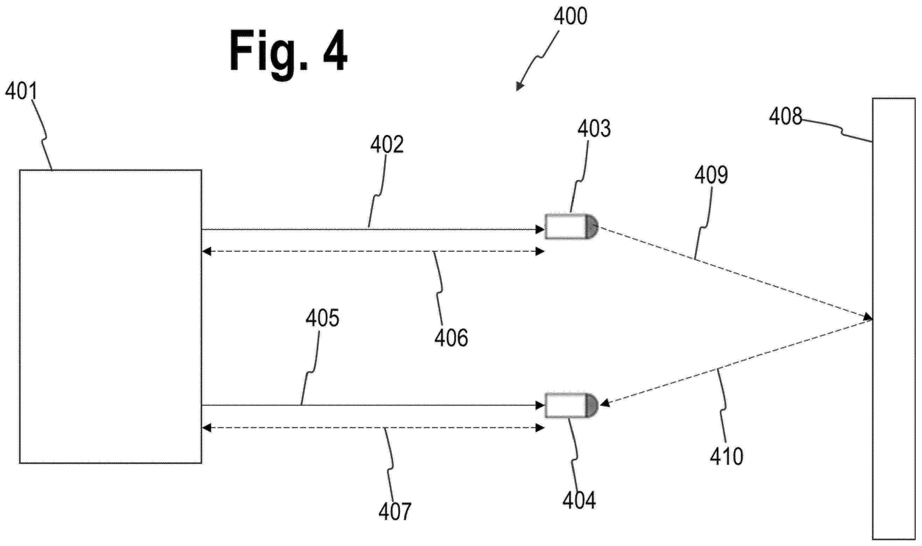

Regarding dual optical systems such as the ones according to Figure 4, kit of determiner tools 101 may include the kit of optical fiber patch cords duplicated to apply any of the kit-based, baseline-prolongations, coarse-fine approaches to both optical fiber line for emitter and optical fiber line for receiver. Still in relation to dual optical systems, kit of determiner tools 101 may also include a reference sample for either reflection or transmission operation of the dual optical system. For example, in reflection operation, such a reference sample may be or may include a reflective surface in which penetration and influence of the material is negligible (for example a mirror). An advantage of this may be that it is not required any additional equipment/instrumentation, i.e., only the dual optical system itself along with the the kit of optical fiber patch cords may suffice in the kit of determiner tools 101 to perform configuration methods according to present disclosure.

The kit of configurator tools 102 may comprise any kind of tools for, once the candidate length 209c has been determined, configuring the optical system 200 with the candidate optical fiber line 202c sized with the determined candidate length 209c. Such tools may include, e.g., instrument or instruments to the extract candidate optical fiber line 202c sized with the candidate length 209c from corresponding reel belonging to designated optical fiber fabrication batch, instrument or instruments to install the extracted candidate optical fiber line 202c connecting the standardized optical pulse generator 201 with the endpoint 203, etc. Regarding dual optical systems such as the ones according to Figure 4, kit of configurator tools 102 may include tools for preparing optical fiber lines for both emitter and receiver to size them with length determined by configuration methods according to present disclosure.

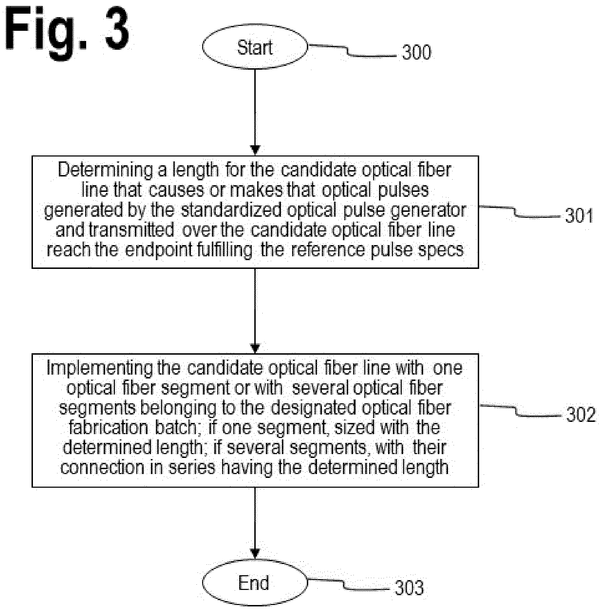

Figure 3 is a flow chart schematically illustrating methods of configuring an optical system according to examples. Since configuring methods according to Figure 3 are performable by using configuring systems such as the ones of Figure 1 and within technical scenarios such as the ones of Figure 2, number references from said Figures 1 and 2 may be reused in following description of Figure 3.

Configuring methods may be started (e.g., at block 300) by, e.g., selecting and/or preparing determiner tools 101 and configurator tools 102 that are estimated to be used to configure the optical system 200 with candidate optical fiber line 202c sized with candidate length 209c.

Configuring methods may further include (e.g., at method-block 301) determining candidate length 209c for the candidate optical fiber line 202c giving rise to that optical pulses 204 transmitted from standardized optical pulse generator 201 across the candidate optical fiber line 202c sized with the candidate length 209c reach the endpoint 203 fulfilling the predefined pulse specs (represented in waveform 207r, 207c). This determining functionality implemented or implementable at method-block 301 may be performed by, e.g., employing instruments in the kit of determiner tools 101. Functional details and considerations explained about said kit of determiner tools 101 may thus be similarly attributed or attributable to method-block 301.

Configuring methods may further include (e.g., at method-block 302) configuring the optical system 200 by implementing the candidate optical fiber line 202c either with one optical fiber segment belonging to the designated optical fiber fabrication batch and sized with the determined length 209c, or with several optical fiber segments belonging to the designated optical fiber fabrication batch and whose connection with each other in series has the determined length 209c. This configuring functionality implemented or implementable at method-block 302 may be performed by, e.g., employing instruments in the kit of configuring tools 102. Functional details and considerations explained about said kit of configuring tools 102 may thus be similarly attributed or attributable to method-block 302.

Configuring methods may still further include (e.g., at method-block 303) terminating execution of the configuring method or, in other words, terminating the configuring of the optical system 200. This termination may be effected by, e.g., validating that the configured optical system 200 operates correctly and, therefore, the performed configuration is successful.

Figure 4 is a block diagram schematically illustrating a dual optical system to be configured by performing configuring methods according to examples, such as the ones according to Figure 3.

As illustrated, optical systems 400 may comprise more than one endpoints. In this particular case, a dual optical system 400 is shown. Systems 400 comprise a standardized optical pulse generator 401 and an endpoint 403 connected with the standardized optical pulse generator 401 through a candidate optical fiber line 402, and another endpoint 404 connected with the standardized optical pulse generator 401 through another candidate optical fiber line 405.

The other candidate optical fiber line 405 may be required to have same transmission performance as the candidate optical fiber line 402. The candidate optical fiber line 402 may have length 406 and the other candidate optical fiber line 405 may have length 407 equal to candidate length 406. The other endpoint 404 may have same endpoint operational specs as the endpoint 403.

The endpoint 403 may be a radiation emitter (e.g., THz emitter) configured to emit, depending on optical pulses from the standardized optical pulse generator 401, an emission radiation 409 towards an object 408 to be radiation-based (e.g., THz-based) examined so that the emission radiation 409 interacts with the object 408. Said interaction between the emission radiation 409 and the object 408 may be interaction of the radiation 409 with the object 408 and subsequent reflection of the interaction radiation 410 or transmission of the radiation 409 through the object 408. In the particular example shown, the emission radiation 409 is reflected onto the object 408. The other endpoint 404 may be a radiation receiver (e.g., THz receiver/sensor) configured to receive/sense, depending on optical pulses from the standardized optical pulse generator 401, an interaction radiation 410 resulting from the interaction of the emission radiation 409 with the object 408.

In systems such as the optical system 400, the fulfilling of the predefined pulse specs by optical pulses at their arrival to the (THz) radiation emitter 403 may be verified by validating operation of the (THz) radiation emitter 403 caused by the received pulses. If the (THz) radiation emitter 403 operates correctly, i.e., satisfying predetermined endpoint operational specs, it may be concluded that pulses received by the (THz) radiation emitter 403 fulfil the predefined pulse specs. Different manners of validating operation of the (THz) radiation emitter 403 may be carried out.

One of said manners may include, e.g., validating whether the interaction radiation 410 is correctly sensed by the (THz) radiation receiver 404, i.e., whether said sensing fulfils and optimizes predetermined sensing specs. If (THz) radiation receiver 404 senses correctly the interaction radiation 410 caused by interaction of the radiation 409 emitted by the (THz) radiation emitter 403, it may be concluded that the (THz) radiation emitter 403 operates correctly and, accordingly, that optical pulses at their arrival to both the (THz) radiation emitter 403 and the radiation receiver 404 fulfil the predefined pulse specs. The predetermined sensing specs to be fulfilled and optimized may correspond to specs on temporal and frequency domain including, e.g., predetermined specs on signal to noise ratio or dynamic range or bandwidth or peak power or energy or any combination thereof.

The predetermined sensing specs to be optimized and satisfied by the (THz) radiation receiver 404 may have been predetermined from detections performed in technical scenario equivalent to the one of Figure 4, and which have been confirmed as accurate and, therefore, as a reference model to follow.

A kind of "transitive property" is thus applied in the above logics: if the receiver 404 operates correctly, this means that the emitter 403 also operates correctly and, in turn, this implies that optical pulses driving the emitter 403 and the receiver 404 are also correct at their arrival to the emitter 403 and the receiver 404, respectively.

Advantage is now taken from Figure 4 to explain other interesting aspects of configuring methods and systems according to present disclosure. Configuration or mounting of the system 400 could be done by simply fully or almost fully relying on standardized optical pulse generators. Standardized optical pulse generator 401 may thus be a particular instance belonging to a type of standard optical pulse generators, or that is selected from standardized optical pulse generators in stock or to be acquired which are structurally, configurationally, operationally and functionally identical to each other.

All implementations of optical systems 400 will have the same standardized optical pulse generator 401. Ensuring a minimum stock of such a standardized optical pulse generators is feasible since they are standardized and hence compatible and valid for all the implementations of optical systems 400. This enables easy replacements in case of any operative issues reducing downtimes of the optical system 400. This also optimizes project timelines and deliveries and installations of optical systems 400. Moreover, standardized manufacture of standardized optical pulse generators 401, typically one of the most expensive elements in optical systems 400, results in lower manufacturing costs and economies of scale. The standard manufacturing and testing procedures also reduces lead times and optimizes the reliability and quality of standardized optical pulse generators 401.

The easy replacement or configuring of optical fibers in optical systems 400 is another advantage derived from configuring methods and systems according to present disclosure. Simply by ensuring that there is some optical fiber reel or reels available belonging to optical fiber fabrication batches with attributed length, the one and the other candidate optical fiber lines 402, 405 may be substituted by or selected from optical fibers coming from any of said reel or reels with attributed length 406, 407. Differently from prior art approaches, it is no longer required to ensure that optical fibers belong to the same optical fiber fabrication batch for which the optical pulse generator 401 has been customized.

To register a new optical fiber reel belonging to new optical fiber fabrication batch and prepare it for being part of optical systems 400, length to be attributed to said new optical fiber fabrication batch may be determined via configuring methods and systems according to present disclosure, and resulting length 406, 407 may be attributed to said new optical fiber fabrication batch.

Although only a number of examples have been disclosed herein, other alternatives, modifications, uses and/or equivalents thereof are possible. Furthermore, all possible combinations of the described examples are also covered. Thus, the scope of the disclosure should not be limited by particular examples, but it should be determined only by a fair reading of the claims that follow.

## Claims

1. Method of configuring an optical system including a standardized optical pulse generator and an endpoint connected with each other by a candidate optical fiber line belonging to a designated optical fiber fabrication batch, the candidate optical fiber line having candidate dispersion parameters; wherein
a reference optical fiber line is known to cause or make that optical pulses generated by the standardized optical pulse generator and transmitted over the reference optical fiber line reach the endpoint fulfilling predefined pulse specs required by the endpoint to operate correctly, the reference optical fiber line having reference dispersion parameters and a reference length; wherein
optical dispersion of any optical fiber path depends on its dispersion parameters whose effects accumulate over its length, said dispersion parameters being variable within fabrication tolerance range due to unavoidable manufacturing imperfections and, therefore, depending on which optical fiber fabrication batch said optical fiber path belongs to, said variability potentially causing non-fulfilment of the predefined pulse specs; and wherein the method comprises:
determining a length for the candidate optical fiber line that causes or makes that optical pulses generated by the standardized optical pulse generator and transmitted over the candidate optical fiber line reach the endpoint fulfilling the predefined pulse specs; and
configuring the optical system by implementing the candidate optical fiber line either with one optical fiber segment belonging to the designated optical fiber fabrication batch and sized with the determined length, or with several optical fiber segments belonging to the designated optical fiber fabrication batch and whose connection with each other in series has the determined length,
wherein the determining of the length for the candidate optical fiber line includes:
- determining the candidate dispersion parameters by examining optical fiber from the designated optical fiber fabrication batch based on any known technique aimed at said purpose, and
- calculating the length for the candidate optical fiber line depending on the reference length and the reference dispersion parameters and the determined candidate dispersion parameters, preferably according to following formula: $CL = RL ∗ RDP / CDP$ wherein: *CL* is the length to be calculated for the candidate optical fiber line, or simply candidate length; RL is the reference length; *RDP* is the first order reference dispersion parameters, typically in ps/(nm·km); and *CDP* is the first order candidate dispersion parameters previously determined, typically in ps/(nm·km);
or includes:
- initially establishing a working length within a discrete range of lengths around the reference length; and
- adjusting the working length by varying it within the discrete range of lengths until it is verified that optical pulses generated by the standardized optical pulse generator and transmitted over the candidate optical fiber line sized with the working length reach the endpoint fulfilling the predefined pulse specs, said predefined pulse specs preferably including reference specs on pulse duration or pulse shape or pulse power or optical spectrum or any combination thereof.

2. Method of configuring an optical system according to claim 1, wherein the optical pulses are laser pulses or short optical pulses or ultra-short optical pulses, or wherein the candidate dispersion parameters and reference dispersion parameters correspond to chromatic dispersion parameters.

3. Method of configuring an optical system according to claim 1, wherein the verifying of whether optical pulses transmitted over the candidate optical fiber line sized with the working length reach the endpoint fulfilling the predefined pulse specs is performed by
verifying whether optical pulses transmitted over the candidate optical fiber line sized with the working length cause fulfilling of endpoint operational specs and, therefore, correct operation of the endpoint.

4. Method of configuring an optical system according to claim 3, wherein the optical system further includes another endpoint connected with the standardized optical pulse generator through another candidate optical fiber line, the other endpoint having same endpoint operational specs as the endpoint, and the other candidate optical fiber line also belonging to the designated optical fiber fabrication batch; wherein
the endpoint is an emitter endpoint configured to emit, depending on optical pulses from the standardized optical pulse generator, an emitted radiation to be reflected onto or transmitted through an object to be inspected, and
the other endpoint is a receiver endpoint configured to sense, depending on optical pulses from the standardized optical pulse generator, a reflected/transmitted radiation caused by the reflection/transmission of the emitted radiation onto/through the object to be inspected; and wherein
the verifying of whether optical pulses transmitted over the candidate optical fiber line sized with the working length cause fulfilling by the endpoint of endpoint operational specs is performed by
verifying whether the receiver endpoint connected with the standardized optical pulse generator by the other candidate optical fiber line sized with the working length senses the reflected/transmitted radiation fulfilling predetermined sensing specs, which are known from previously performed sensing that has been confirmed as accurate and, therefore, as denoting correct operation of the emitter endpoint.

5. Method of configuring an optical system according to claim 4, wherein the endpoint or emitter endpoint is a Terahertz, THz, emitter and the other endpoint or receiver endpoint is a THz receiver or sensor; or wherein
the predetermined sensing specs correspond to specs on temporal and frequency domain including specs on signal to noise ratio or dynamic range or bandwidth or peak power or energy or any combination thereof.

6. Method of configuring an optical system according to claim 1, wherein the adjusting of the working length comprises:
determining, from previously performed adjustments on the working length, an adjusting trend or evolution indicating approaching to or moving away from the fulfilling of the predefined pulse specs; and
determining the adjusting to be applied to the working length depending on the determined adjusting trend or evolution; wherein
the determining of the adjusting trend or evolution preferably includes determining a magnitude trend or evolution indicating increasing or decreasing magnitude of the approaching or of the moving away, and the determining of the adjusting to be applied preferably includes determining a magnitude of the adjusting to be applied to the working length depending on the determined magnitude trend or evolution.

7. Method of configuring an optical system according to claim 1, comprising using a kit of optical fiber patch cords of different lengths belonging to the designated optical fiber fabrication batch, said different lengths or sums thereof conforming the discrete range of lengths; wherein the candidate optical fiber line is sized with the working length by
selecting, from the kit of optical fiber patch cords, either one of said optical fiber patch cords with length equal to or best approximating the working length or several of said optical fiber patch cords whose connection in series has length equal to or best approximating the working length.

8. Method of configuring an optical system according to claim 7, wherein the optical fiber patch cords in the kit comprise a baseline optical fiber patch cord having a baseline length and optical fiber prolongations each having a prolongation length, so that sums of the baseline length and the prolongation lengths conform the discrete range of lengths; and wherein the candidate optical fiber line is sized with the working length by
selecting, from the kit of optical fiber patch cords, one or more of the optical fiber prolongations whose connection in series with each other and with the baseline optical fiber patch cord has length equal to or best approximating the working length.

9. Method of configuring an optical system according to claim 8, wherein the optical fiber prolongations in the kit comprise coarse prolongations each having a coarse length and fine prolongations each having a fine length, so that sums of the baseline length, the coarse lengths and the fine lengths conform the discrete range of lengths; wherein
the coarse lengths form a series of lengths with a coarse distance between a coarse length and next coarse length in the series, the fine lengths form a series of lengths with a fine distance between a fine length and next fine length in the series, and the series of fine lengths fall within or span an extent of the coarse distance; and wherein the candidate optical fiber line is sized with the working length by
selecting, from the kit of optical fiber patch cords, one of the coarse prolongations whose connection in series with the baseline optical fiber patch cord has length best approximating below the working length; and
selecting, from the kit of optical fiber patch cords, one of the fine prolongations whose connection in series with the previously selected coarse prolongation and with the baseline optical fiber patch cord has length equal to or best approximating the working length.

10. Method of configuring an optical system according to claim 1, wherein the initially establishing of the working length includes:
determining the candidate dispersion parameters by examining optical fiber from the designated optical fiber fabrication batch based on any known technique aimed at said purpose, and
initially establishing the working length depending on the reference length and the reference dispersion parameters and the determined candidate dispersion parameters, preferably according to following formula: $WL = RL ∗ RDP / CDP$ wherein: *WL* is the working length to be initially established; RL is the reference length; *RDP* is the first order reference dispersion parameters, typically in ps/(nm·km); and *CDP* is the first order candidate dispersion parameters previously determined, typically in ps/(nm·km).

11. Method of configuring an optical system according to any of claims 1 to 10, wherein an intended application of the optical system requires a minimum length for the candidate optical fiber line, and the reference length is the minimum length plus an extent of a difference interval within which a difference between the candidate optical fiber line's length and the reference length is estimated or expected to range in accordance with a factory dispersion tolerance in optical fiber manufacturing; or wherein
the determined length for the candidate optical fiber line is attributed or assigned to the designated optical fiber fabrication batch or to reel or reels belonging to the designated optical fiber fabrication batch, so that
any other candidate optical fiber line required to have same transmission performance as the candidate optical fiber line to cause fulfilling of the predefined pulse specs is implementable either with
one optical fiber portion belonging to the designated optical fiber fabrication batch and sized with the length attributed to the designated optical fiber fabrication batch, or with
several optical fiber portions belonging to the designated optical fiber fabrication batch and whose connection with each other in series has the length attributed to the designated optical fiber fabrication batch.

12. Method of configuring an optical system according to claim 11, wherein the optical system additionally includes a further endpoint connected with the standardized optical pulse generator through a further candidate optical fiber line, the further endpoint having same endpoint operational specs as the endpoint, and the further candidate optical fiber line requiring same transmission performance as the candidate optical fiber line to cause fulfilling of the predefined pulse specs; and wherein
the configuring of the optical system additionally includes implementing the further candidate optical fiber line either with one optical fiber part belonging to the designated optical fiber fabrication batch and sized with the determined length, or with several optical fiber parts belonging to the designated optical fiber fabrication batch and whose connection with each other in series has the determined length.

13. System for configuring an optical system including a standardized optical pulse generator and an endpoint connected with each other by a candidate optical fiber line belonging to a designated optical fiber fabrication batch, the candidate optical fiber line having candidate dispersion parameters; wherein
a reference optical fiber line is known to cause or make that optical pulses generated by the standardized optical pulse generator and transmitted over the reference optical fiber line reach the endpoint fulfilling predefined pulse specs required by the endpoint to operate correctly, the reference optical fiber line having reference dispersion parameters and a reference length; wherein
optical dispersion of any optical fiber path depends on its dispersion parameters whose effects accumulate over its length, said dispersion parameters being variable within fabrication tolerance range due to unavoidable manufacturing imperfections and, therefore, depending on which optical fiber fabrication batch said optical fiber path belongs to, said variability potentially causing non-fulfilment of the predefined pulse specs; and wherein the system comprises:
a determiner tools kit configured
for determining, by an operator of the system, a length for the candidate optical fiber line that causes or makes that optical pulses generated by the standardized optical pulse generator and transmitted over the candidate optical fiber line reach the endpoint fulfilling the predefined pulse specs; and
a configurator tools kit for configuring, by the operator of the system, the optical system by implementing the candidate optical fiber line either with one optical fiber segment belonging to the designated optical fiber fabrication batch and sized with the determined length, or with several optical fiber segments belonging to the designated optical fiber fabrication batch and whose connection with each other in series has the determined length;
wherein the determining of the length for the candidate optical fiber line includes:
- determining the candidate dispersion parameters by examining optical fiber from the designated optical fiber fabrication batch based on any known technique aimed at said purpose, and
- calculating the length for the candidate optical fiber line depending on the reference length and the reference dispersion parameters and the determined candidate dispersion parameters, preferably according to following formula: $CL = RL ∗ RDP / CDP$ wherein: *CL* is the length to be calculated for the candidate optical fiber line, or simply candidate length; RL is the reference length; *RDP* is the first order reference dispersion parameters, typically in ps/(nm·km); and *CDP* is the first order candidate dispersion parameters previously determined, typically in ps/(nm·km);
or includes:
- initially establishing a working length within a discrete range of lengths around the reference length; and
- adjusting the working length by varying it within the discrete range of lengths until it is verified that optical pulses generated by the standardized optical pulse generator and transmitted over the candidate optical fiber line sized with the working length reach the endpoint fulfilling the predefined pulse specs, said predefined pulse specs preferably including reference specs on pulse duration or pulse shape or pulse power or optical spectrum or any combination thereof.

## Patentansprüche

1. Verfahren zum Konfigurieren eines optischen Systems, das einen standardisierten optischen Impulsgenerator und einen Endpunkt umfasst, die durch eine in Frage kommende Lichtleitfaserleitung miteinander verbunden sind, die zu einer bestimmten Lichtleitfaserherstellungscharge gehört, wobei die in Frage kommende Lichtleitfaserleitung in Frage kommende Dispersionsparameter aufweist; wobei
es ist bekannt, dass eine Bezugslichtleitfaserleitung hervorruft oder bewirkt, dass optische Impulse, die von dem standardisierten optischen Impulsgenerator erzeugt und über die Bezugslichtleitfaserleitung transmittiert werden, den Endpunkt unter Erfüllung der vordefinierten Impulsspezifikationen erreichen, die von dem Endpunkt für einen korrekten Betrieb erforderlich sind, wobei die Bezugslichtleitfaserleitung Bezugsdispersionsparameter und eine Bezugslänge aufweist; wobei
optische Dispersion eines beliebigen optischen Faserpfads von seinen Dispersionsparametern abhängt, deren Auswirkungen sich über seine Länge akkumulieren, wobei die Dispersionsparameter innerhalb des Fertigungstoleranzbereichs aufgrund unvermeidlicher Herstellungsfehler variabel sind und daher, abhängig von der Herstellungscharge der optischen Faser, zu der der optische Faserpfad gehört, die Variabilität möglicherweise die Nichterfüllung der vordefinierten Impulsspezifikationen verursacht; und wobei das Verfahren Folgendes umfasst:
bestimmen einer Länge für die in Frage kommende Lichtleitfaserleitung, die hervorruft oder bewirkt, dass optische Impulse, die von dem standardisierten optischen Impulsgenerator erzeugt und über die in Frage kommende Lichtleitfaserleitung transmittiert werden, den Endpunkt unter Erfüllung der vordefinierten Impulsspezifikationen erreichen; und
konfigurieren des optischen Systems durch Implementieren der in Frage kommenden Lichtleitfaserleitung entweder mit einem Lichtleitfasersegment, das zu der bestimmten Lichtleitfaserherstellungscharge gehört und mit der bestimmten Länge bemessen ist, oder mit mehreren Lichtleitfasersegmenten, die zu der bestimmten Lichtleitfaserherstellungscharge gehören und deren Verbindung miteinander in Reihe die bestimmte Länge hat,
wobei das Bestimmen der Länge für die in Frage kommende Lichtleitfaserleitung Folgendes beinhaltet:
- bestimmen der in Frage kommenden Dispersionsparameter durch Untersuchung der optischen Faser aus der bestimmten Lichtleitfaserherstellungscharge auf der Grundlage einer beliebigen bekannten Technik, die auf diesen Zweck abzielt, und
- berechnen der Länge für die in Frage kommende Lichtleitfaserleitung in Abhängigkeit von der Bezugslänge und den Bezugsdispersionsparametern und den bestimmten in Frage kommenden Dispersionsparametern, vorzugsweise gemäß der folgenden Formel: $CL = RL ∗ RDP / CDP$ wobei: *CL* die Länge ist, die für die in Frage kommende Lichtleitfaserleitung oder einfach die in Frage kommende Länge berechnet werden soll; *RL* die Bezugslänge ist; *RDP* der Bezugsdispersionsparameter erster Ordnung, typischerweise in ps/(nm·km), ist; und *CDP* die zuvor bestimmten in Frage kommenden Dispersionsparameter erster Ordnung, typischerweise in ps/(nm·km), ist;
oder Folgendes umfasst:
- zunächst festlegen einer Arbeitslänge innerhalb eines diskreten Längenbereichs um die Bezugslänge herum; und
- einstellen der Arbeitslänge durch Variieren derselben innerhalb des diskreten Längenbereichs, bis überprüft ist, dass optische Impulse, die von dem standardisierten optischen Impulsgenerator erzeugt und über die mit der Arbeitslänge bemessene, in Frage kommende Lichtleitfaserleitung transmittiert werden, den Endpunkt unter Erfüllung der vordefinierten Impulsspezifikationen erreichen, wobei die vordefinierten Impulsspezifikationen vorzugsweise Bezugsspezifikationen über die Impulsdauer oder die Impulsform oder die Impulsleistung oder das optische Spektrum oder eine beliebige Kombination davon enthalten.

2. Verfahren zum Konfigurieren eines optischen Systems nach Anspruch 1, wobei die optischen Impulse Laserimpulse oder kurze optische Impulse oder ultrakurze optische Impulse sind, oder wobei die in Frage kommenden Dispersionsparameter und Bezugsdispersionsparameter chromatischen Dispersionsparametern entsprechen.

3. Verfahren zum Konfigurieren eines optischen Systems nach Anspruch 1, wobei das Überprüfen, ob optische Impulse, die über die mit der Arbeitslänge bemessene in Frage kommende Lichtleitfaserleitung transmittiert werden, den Endpunkt unter Erfüllung der vordefinierten Impulsspezifikationen erreichen, durchgeführt wird, indem
überprüft wird, ob optische Impulse, die über die in Frage kommende Lichtleitfaserleitung transmittiert werden, die mit der Arbeitslänge bemessen ist, die Erfüllung der Betriebsspezifikationen des Endpunkts und damit den korrekten Betrieb des Endpunkts hervorrufen.

4. Verfahren zum Konfigurieren eines optischen Systems nach Anspruch 3, wobei das optische System ferner einen anderen Endpunkt beinhaltet, der mit dem standardisierten optischen Impulsgenerator über eine andere in Frage kommende Lichtleitfaserleitung verbunden ist, wobei der andere Endpunkt die gleichen Betriebsspezifikationen des Endpunkts wie der Endpunkt aufweist und die andere in Frage kommende Lichtleitfaserleitung ebenfalls zu der bestimmten Lichtleitfaserherstellungscharge gehört; wobei
der Endpunkt ein Emitterendpunkt ist, der so konfiguriert ist, dass er in Abhängigkeit von optischen Impulsen des standardisierten optischen Impulsgenerators eine emittierte Strahlung emittiert, die an einem zu inspizierenden Objekt reflektiert oder durch dieses übermittelt werden soll, und
der andere Endpunkt ein Empfängerendpunkt ist, der dazu konfiguriert ist, in Abhängigkeit von optischen Impulsen von dem standardisierten optischen Impulsgenerator eine reflektierte/transmittierte Strahlung zu erfassen, die durch die Reflexion/Transmission der emittierten Strahlung auf/durch das zu inspizierende Objekt hervorgerufen wird; und wobei
die Überprüfung, ob optische Impulse, die über die in Frage kommende Lichtleitfaserleitung übertragen werden, die mit der Arbeitslänge bemessen ist, die Erfüllung der Endpunktbetriebsspezifikationen durch den Endpunkt hervorrufen, durchgeführt wird, indem
überprüft wird, ob der Empfängerendpunkt, der mit dem standardisierten optischen Impulsgenerator durch die andere in Frage kommende Lichtleitfaserleitung verbunden ist, die mit der Arbeitslänge bemessen ist, die reflektierte/transmittierte Strahlung unter Erfüllung der vorbestimmten Erfassungsspezifikationen erfasst, die aus einer zuvor durchgeführten Erfassung bekannt sind, deren Genauigkeit bestätigt wurde und daher als von korrektem Betrieb des Senderendpunkts bezeichnend sind.

5. Verfahren zum Konfigurieren eines optischen Systems nach Anspruch 4, wobei der Endpunkt oder Senderendpunkt ein THz-Sender (Terahertz-Sender) ist und der andere Endpunkt oder Empfängerendpunkt ein THz-Empfänger oder THz-Sensor ist; oder wobei
die vorbestimmten Erfassungsspezifikationen Spezifikationen für den Zeit- und Frequenzbereich, einschließlich Spezifikationen für das Signal-Rausch-Verhältnis oder den Dynamikbereich oder die Bandbreite oder die Peakleistung oder Peakenergie oder eine Kombination davon entsprechen.

6. Verfahren zum Konfigurieren eines optischen Systems nach Anspruch 1, wobei das Einstellen der Arbeitslänge Folgendes umfasst:
bestimmen von, ausgehend von zuvor durchgeführten Einstellungen an der Arbeitslänge, einem Einstelltrend oder Einstellverlauf, der eine Annäherung an das Erfüllen der vordefinierten Impulsspezifikationen oder eine Entfernung davon angibt; und
bestimmen der Einstellung, die auf die Arbeitslänge angewendet werden soll, in Abhängigkeit von dem bestimmten Einstelltrend oder Einstellverlauf; wobei
das Bestimmen des Einstelltrends oder des Einstellverlaufs vorzugsweise das Bestimmen eines Größentrends oder Größenverlauf beinhaltet, der eine zunehmende oder abnehmende Größe des Annäherns oder des sich davon Entfernen angibt, und das Bestimmen der anzuwendenden Einstellung vorzugsweise das Bestimmen einer Größe der auf die Arbeitslänge anzuwendenden Anpassung in Abhängigkeit von dem bestimmten Größentrend oder Größenverlauf beinhaltet.

7. Verfahren zum Konfigurieren eines optischen Systems nach Anspruch 1, das die Verwendung eines Satzes von Lichtwellenleiter-Patchkabeln mit unterschiedlichen Längen umfasst, die zu der bestimmten Lichtleitfaserherstellungscharge gehören, wobei die unterschiedlichen Längen oder Summen davon dem diskreten Längenbereich entsprechen; wobei die in Frage kommende Lichtleitfaserleitung mit der Arbeitslänge bemessen wird, indem
auswählt wird, aus dem Satz von Lichtwellenleiter-Patchkabeln, entweder eines der Lichtwellenleiter-Patchkabel mit einer Länge, die gleich der Arbeitslänge ist oder am besten der Arbeitslänge nahekommt, oder mehrerer von den Lichtwellenleiter-Patchkabeln, deren Verbindung in Reihe eine Länge aufweist, die der Arbeitslänge entspricht oder dieser am besten nahekommt.

8. Verfahren zum Konfigurieren eines optischen Systems nach Anspruch 7, wobei die Lichtwellenleiter-Patchkabel in dem Satz ein Basis-Lichtwellenleiter-Patchkabel mit einer Basislänge und Lichtwellenleiterverlängerungen mit jeweils einer Verlängerungslänge umfassen, so dass die Summen der Basislänge und der Verlängerungslängen dem diskreten Längenbereich entsprechen; und wobei die in Frage kommende Lichtleitfaserleitung mit der Arbeitslänge bemessen wird indem
aus dem Satz von Lichtwellenleiter-Patchkabeln, eine oder mehrere der Lichtwellenleiterverlängerungen, deren Verbindung in Reihe miteinander und mit dem Basis-Lichtwellenleiter-Patchkabel eine Länge aufweist, die der Arbeitslänge entspricht oder dieser am besten nahekommt.

9. Verfahren zum Konfigurieren eines optischen Systems nach Anspruch 8, wobei die optischen Faserverlängerungen in dem Satz grobe Verlängerungen mit jeweils einer groben Länge und feine Verlängerungen mit jeweils einer feinen Länge umfassen, so dass Summen der Grundlinienlänge, der groben Längen und der feinen Längen dem diskreten Längenbereich entsprechen; wobei
die groben Längen eine Reihe von Längen mit einem groben Abstand zwischen einer groben Länge und der nächsten groben Länge in der Reihe bilden, die feinen Längen eine Reihe von Längen mit einem feinen Abstand zwischen einer feinen Länge und der nächsten feinen Länge in der Reihe bilden, und die Reihe von feinen Längen innerhalb fallen oder ein Ausmaß des groben Abstands überspannen; und wobei die in Frage kommende Lichtleitfaserleitung mit der Arbeitslänge bemessen ist durch
die Auswahl von einer der groben Verlängerungen aus dem Satz von Lichtleitfaser-Patchkabeln, deren Verbindung in Reihe mit dem Basis-Lichtleitfaser-Patchkabel eine Länge aufweist, die am besten der Arbeitslänge von unten nahekommt; und
die Auswahl einer der feinen Verlängerungen aus dem Satz von Lichtleitfaser-Patchkabeln, deren Verbindung in Reihe mit der zuvor ausgewählten groben Verlängerung und mit dem Basis-Lichtleitfaser-Patchkabel eine Länge aufweist, die der Arbeitslänge entspricht oder dieser am besten nahekommt.

10. Verfahren zum Konfigurieren eines optischen Systems nach Anspruch 1, wobei das zunächst Festlegen der Arbeitslänge Folgendes beinhaltet:
bestimmen der in Frage kommenden Dispersionsparameter durch Untersuchung der optischen Faser aus der bestimmten Lichtleitfaserherstellungscharge auf der Grundlage einer beliebigen bekannten Technik, die auf diesen Zweck abzielt, und
zunächst festlegen der Arbeitslänge in Abhängigkeit von der Referenzlänge und den Bezugsdispersionsparametern und den ermittelten in Frage kommenden Dispersionsparametern, vorzugsweise nach der folgenden Formel: $WL = RL ∗ RDP / CDP$ wobei: *WL* die zunächst festzulegende Arbeitslänge ist; *RL* die Bezugslänge ist; *RDP* die Bezugsdispersionsparameter erster Ordnung, typischerweise in ps/(nm·km), ist; und *CDP* die zuvor bestimmten in Frage kommenden Datendispersionsparameter erster Ordnung, typischerweise in ps/(nm·km), ist.

11. Verfahren zum Konfigurieren eines optischen Systems nach einem der Ansprüche 1 bis 10, wobei eine beabsichtigte Anwendung des optischen Systems eine Mindestlänge für die in Frage kommende Lichtleitfaserleitung erfordert und die Bezugslänge die Mindestlänge plus ein Ausmaß eines Differenzintervalls ist, innerhalb dessen eine Differenz zwischen der Länge der in Frage kommenden Lichtleitfaserleitung und der Bezugslänge geschätzt wird oder erwartet wird, dass sie in Übereinstimmung mit einer werkseitigen Dispersionstoleranz bei der Herstellung optischer Fasern liegt; oder wobei
die ermittelte Länge für die in Frage kommende Lichtleitfaserleitung der bestimmten Lichtleitfaserherstellungscharge oder einer oder mehreren zu der bestimmten Lichtleitfaserherstellungscharge gehörenden Spule(n) zugeordnet wird, so dass
jede andere in Frage kommende Lichtleitfaserleitung, die die gleiche Übertragungsleistung wie die in Frage kommende Lichtleitfaserleitung aufweisen muss, um die Erfüllung der vordefinierten Impulsspezifikationen hervorzurufen, implementiert werden kann entweder mit
einem Lichtwellenleiterabschnitt, der zu der bestimmten Lichtleitfaserherstellungscharge gehört und mit der Länge bemessen ist, die der bestimmten Lichtleitfaserherstellungscharge zugeordnet ist, oder mit
mehreren Lichtwellenleiterabschnitten, die zu dem bestimmten Lichtleitfaserherstellungscharge gehören und deren Verbindung miteinander in Reihe die Länge aufweist, die dem bestimmten Lichtleitfaserherstellungscharge zugeordnet ist.

12. Verfahren zum Konfigurieren eines optischen Systems nach Anspruch 11, wobei das optische System zusätzlich einen weiteren Endpunkt beinhaltet, der mit dem standardisierten optischen Impulsgenerator über eine weitere in Frage kommende Lichtleitfaserleitung verbunden ist, wobei der weitere Endpunkt die gleichen Betriebsspezifikationen des Endpunkts wie der Endpunkt aufweist und die weitere in Frage kommende Lichtleitfaserleitung die gleiche Übertragungsleistung wie die in Frage kommende Lichtleitfaserleitung aufweisen muss, um das Erfüllen der vordefinierten Impulsspezifikationen hervorzurufen; und wobei
das Konfigurieren des optischen Systems zusätzlich das Implementieren der weiteren in Frage kommenden Lichtleitfaserleitung entweder mit einem Lichtleitfaserteil, das zu der bestimmten Lichtleitfaserherstellungscharge gehört und mit der bestimmten Länge bemessen ist, oder mit mehreren Lichtleitfaserteilen, die zu der bestimmten Lichtleitfaserherstellungscharge gehören und deren Verbindung miteinander in Reihe die bestimmte Länge aufweist, umfasst.

13. System zum Konfigurieren eines optischen Systems, das einen standardisierten optischen Impulsgenerator und einen Endpunkt enthält, die durch eine in Frage kommenden Lichtleitfaserleitung miteinander verbunden sind, die zu einer bestimmten Lichtleitfaserherstellungscharge gehört, wobei die in Frage kommende Lichtleitfaserleitung in Frage kommende Dispersionsparameter aufweist; wobei
es ist bekannt, dass eine Bezugslichtleitfaserleitung hervorruft oder bewirkt, dass optische Impulse, die von dem standardisierten optischen Impulsgenerator erzeugt und über die Bezugslichtleitfaserleitung transmittiert werden, den Endpunkt unter Erfüllung der vordefinierten Impulsspezifikationen erreichen, die von dem Endpunkt für einen korrekten Betrieb erforderlich sind, wobei die Bezugslichtleitfaserleitung Bezugsdispersionsparameter und eine Bezugslänge aufweist; wobei
die optische Dispersion eines beliebigen optischen Faserpfads von seinen Dispersionsparametern abhängt, deren Auswirkungen sich über seine Länge akkumulieren, wobei die Dispersionsparameter aufgrund unvermeidlicher Herstellungsfehler innerhalb des Fertigungstoleranzbereichs variabel sind und daher abhängig davon, zu welcher Lichtleitfaserherstellungscharge der optische Faserpfad gehört, wobei die Variabilität möglicherweise die Nichterfüllung der vordefinierten Impulsspezifikationen verursacht; und wobei das System Folgendes umfasst:
einen Bestimmungs-Werkzeugsatz, der dazu konfiguriert ist, von einem Bediener des Systems eine Länge für die in Frage kommende Lichtleitfaserleitung zu bestimmen, die hervorruft oder bewirkt, dass optische Impulse, die von dem standardisierten optischen Impulsgenerator erzeugt und über die in Frage kommende Lichtleitfaserleitung transmittiert werden, den Endpunkt unter Erfüllung der vordefinierten Impulsspezifikationen erreichen; und
einen Konfigurator-Werkzeugsatz zum Konfigurieren des optischen Systems durch den Betreiber des Systems durch Implementieren der in Frage kommenden Lichtleitfaserleitung entweder mit einem optischen Fasersegment, das zu der bestimmten Lichtleitfaserherstellungscharge gehört und mit der bestimmten Länge bemessen ist, oder mit mehreren optischen Fasersegmenten, die zu der bestimmten Lichtleitfaserherstellungscharge gehören und deren Verbindung miteinander in Reihe die bestimmte Länge hat;
wobei das Bestimmen der Länge für die in Frage kommende Lichtleitfaserleitung Folgendes beinhaltet:
- bestimmen der in Frage kommenden Dispersionsparameter durch Untersuchung der optischen Faser aus der bestimmten Lichtleitfaserherstellungscharge auf der Grundlage einer beliebigen bekannten Technik, die auf diesen Zweck abzielt, und
- berechnen der Länge für die in Frage kommende Lichtleitfaserleitung in Abhängigkeit von der Bezugslänge und den Bezugsdispersionsparametern und den bestimmten in Frage kommenden Dispersionsparametern, vorzugsweise gemäß der folgenden Formel: $CL = RL ∗ RDP / CDP$ wobei: *CL* die Länge ist, die für die in Frage kommende Lichtleitfaserleitung oder einfach die in Frage kommende Länge berechnet werden soll; *RL* die Bezugslänge ist; *RDP* der Bezugsdispersionsparameter erster Ordnung, typischerweise in ps/(nm·km), ist; und *CDP* die zuvor bestimmten in Frage kommenden Dispersionsparameter erster Ordnung, typischerweise in ps/(nm·km), ist;
oder Folgendes umfasst:
- zunächst festlegen einer Arbeitslänge innerhalb eines diskreten Längenbereichs um die Bezugslänge herum; und
- einstellen der Arbeitslänge durch Variieren derselben innerhalb des diskreten Längenbereichs, bis überprüft ist, dass optische Impulse, die von dem standardisierten optischen Impulsgenerator erzeugt und über die mit der Arbeitslänge bemessene in Frage kommende Lichtleitfaserleitung transmittiert werden, den Endpunkt unter Erfüllung der vordefinierten Impulsspezifikationen erreichen, wobei die vordefinierten Impulsspezifikationen vorzugsweise Bezugsspezifikationen über die Impulsdauer oder die Impulsform oder die Impulsleistung oder das optische Spektrum oder eine beliebige Kombination davon enthalten.

## Revendications

1. Procédé de configuration d'un système optique comprenant un générateur d'impulsions optiques normalisé et un point d'extrémité connectés l'un à l'autre par une ligne de fibre optique candidate appartenant à un lot de fabrication de fibre optique désigné, la ligne de fibre optique candidate ayant des paramètres de dispersion candidats ; dans lequel :
une ligne de fibre optique de référence est connue pour donner lieu à ou faire en sorte que les impulsions optiques générées par le générateur d'impulsions optiques normalisé et transmises sur la ligne de fibre optique de référence atteignent le point d'extrémité satisfaisant les spécifications d'impulsions prédéfinies requises par le point d'extrémité pour fonctionner correctement, la ligne de fibre optique de référence ayant des paramètres de dispersion de référence et une longueur de référence ; dans lequel
la dispersion optique de tout chemin de fibre optique dépend de ses paramètres de dispersion dont les effets s'accumulent sur sa longueur, lesdits paramètres de dispersion étant variables dans la plage de tolérance de fabrication en raison d'imperfections de fabrication inévitables et, par conséquent, en fonction du lot de fabrication de fibre optique auquel appartient ledit chemin de fibre optique, ladite variabilité donnant potentiellement lieu à la non-réalisation des spécifications d'impulsion prédéfinies ; et dans lequel le procédé comprend :
déterminer une longueur pour la ligne de fibre optique candidate qui donne lieu à ou fait en sorte que les impulsions optiques générées par le générateur d'impulsions optiques normalisé et transmises sur la ligne de fibre optique candidate atteignent le point d'extrémité satisfaisant les spécifications d'impulsions prédéfinies ; et
configurer le système optique en mettant en œuvre la ligne de fibre optique candidate soit avec un segment de fibre optique appartenant au lot de fabrication de fibre optique désigné et dimensionné avec la longueur déterminée, soit avec plusieurs segments de fibre optique appartenant au lot de fabrication de fibre optique désigné et dont la connexion entre eux en série a la longueur déterminée,
dans lequel la détermination de la longueur pour la ligne de fibre optique candidate comprend :
- déterminer les paramètres de dispersion candidats en examinant la fibre optique à partir du lot de fabrication de fibre optique désigné sur la base d'une technique connue quelconque visant à cet effet, et
- calculer la longueur de la ligne de fibre optique candidate en fonction de la longueur de référence et des paramètres de dispersion de référence et des paramètres de dispersion candidats déterminés, de préférence selon la formule suivante : $CL = RL ∗ RDP / CDP$ dans laquelle : *CL* est la longueur à calculer pour la ligne de fibre optique candidate, ou simplement la longueur candidate ; *RL* est la longueur de référence ; *RDP* est les paramètres de dispersion de référence de premier ordre, généralement en ps/(nm·km) ; et *CDP* est les paramètres de dispersion candidats de premier ordre précédemment déterminés, généralement en ps/(nm·km) ;
ou comprend :
- établir initialement une longueur de travail dans une plage discrète de longueurs autour de la longueur de référence ; et
- ajuster la longueur de travail en la faisant varier dans la plage discrète de longueurs jusqu'à ce qu'il soit vérifié que les impulsions optiques générées par le générateur d'impulsions optiques normalisé et transmises sur la ligne de fibre optique candidate dimensionnée avec la longueur de travail atteignent le point d'extrémité satisfaisant les spécifications d'impulsions prédéfinies, lesdites spécifications d'impulsions prédéfinies comprenant de préférence des spécifications de référence sur la durée d'impulsion ou la forme d'impulsion ou la puissance d'impulsion ou le spectre optique ou une combinaison quelconque de ceux-ci.

2. Procédé de configuration d'un système optique selon la revendication 1, dans lequel les impulsions optiques sont des impulsions laser ou des impulsions optiques courtes ou des impulsions optiques ultra-courtes, ou dans lequel les paramètres de dispersion candidats et les paramètres de dispersion de référence correspondent à des paramètres de dispersion chromatique.

3. Procédé de configuration d'un système optique selon la revendication 1, dans lequel la vérification de si les impulsions optiques transmises sur la ligne de fibre optique candidate dimensionnée avec la longueur de travail atteignent le point d'extrémité satisfaisant les spécifications d'impulsion prédéfinies est effectuée en
vérifiant si les impulsions optiques transmises sur la ligne de fibre optique candidate dimensionnée avec la longueur de travail donnent lieu à la satisfaction de spécifications opérationnelles du point d'extrémité et, par conséquent, au fonctionnement correct du point d'extrémité.

4. Procédé de configuration d'un système optique selon la revendication 3, dans lequel le système optique comprend en outre un autre point d'extrémité connecté au générateur d'impulsions optiques normalisé par l'intermédiaire d'une autre ligne de fibre optique candidate, l'autre point d'extrémité ayant les mêmes spécifications opérationnelles de point d'extrémité que le point d'extrémité, et l'autre ligne de fibre optique candidate appartenant également au lot de fabrication de fibre optique désigné ; dans lequel
le point d'extrémité est un point d'extrémité émetteur configuré pour émettre, en fonction des impulsions optiques provenant du générateur d'impulsions optiques normalisé, un rayonnement émis à réfléchir sur ou à transmettre à travers un objet à inspecter, et
l'autre point d'extrémité est un point d'extrémité de récepteur configuré pour détecter, en fonction des impulsions optiques provenant du générateur d'impulsions optiques normalisé, un rayonnement réfléchi/transmis causé par la réflexion/transmission du rayonnement émis sur/à travers l'objet à inspecter ; et dans lequel
la vérification de si les impulsions optiques transmises sur la ligne de fibre optique candidate dimensionnée avec la longueur de travail donnent lieu à la satisfaction de spécifications opérationnelles de point d'extrémité par le point d'extrémité est effectuée en
vérifiant si le point d'extrémité du récepteur connecté au générateur d'impulsions optiques normalisé par l'autre ligne de fibre optique candidate dimensionnée avec la longueur de travail détecte le rayonnement réfléchi/transmis satisfaisant les spécifications de détection prédéterminées, lesquelles sont connues à partir d'une détection précédemment effectuée qui a été confirmée comme précise et, par conséquent, comme indiquant un fonctionnement correct du point d'extrémité de l'émetteur.

5. Procédé de configuration d'un système optique selon la revendication 4, dans lequel le point d'extrémité ou le point d'extrémité d'émetteur est un émetteur Terahertz, THz, et l'autre point d'extrémité ou point d'extrémité de récepteur est un récepteur ou un capteur THz ; ou dans lequel
les spécifications de détection prédéterminées correspondent à des spécifications sur le domaine temporel et fréquentiel, y compris des spécifications sur le rapport signal sur bruit ou la plage dynamique ou la largeur de bande ou la puissance ou l'énergie de crête ou une combinaison quelconque de ceux-ci.

6. Procédé de configuration d'un système optique selon la revendication 1, dans lequel l'ajustement de la longueur de travail comprend :
déterminer, à partir des ajustements précédemment effectués sur la longueur de travail, une tendance ou une évolution d'ajustement indiquant l'approche ou l'éloignement par rapport à la satisfaction des spécifications d'impulsion prédéfinies ; et
déterminer l'ajustement à appliquer à la longueur de travail en fonction de la tendance ou de l'évolution d'ajustement déterminée ; dans lequel
la détermination de la tendance ou de l'évolution d'ajustement comprend de préférence la détermination d'une tendance ou d'une évolution d'amplitude indiquant une amplitude croissante ou décroissante de l'approche ou de l'éloignement, et la détermination de l'ajustement à appliquer comprend de préférence la détermination d'une amplitude de l'ajustement à appliquer à la longueur de travail en fonction de la tendance ou de l'évolution d'amplitude déterminée.

7. Procédé de configuration d'un système optique selon la revendication 1, comprenant l'utilisation d'un kit de cordons de raccordement à fibres optiques de différentes longueurs appartenant au lot de fabrication de fibres optiques désigné, lesdites différentes longueurs ou leurs sommes étant conformes à la plage discrète de longueurs ; dans lequel la ligne de fibre optique candidate est dimensionnée avec la longueur de travail en
sélectionnant, dans le kit de cordons de raccordement à fibres optiques, soit l'un desdits cordons de raccordement à fibres optiques ayant une longueur égale à la longueur de travail ou s'en approchant le mieux, soit plusieurs desdits cordons de raccordement à fibres optiques dont la connexion en série a une longueur égale à la longueur de travail ou s'en approchant le mieux.

8. Procédé de configuration d'un système optique selon la revendication 7, dans lequel les cordons de raccordement à fibres optiques dans le kit comprennent un cordon de raccordement à fibre optique de base ayant une longueur de base et des prolongements de fibre optique ayant chacun une longueur de prolongement, de sorte que les sommes de la longueur de base et des longueurs de prolongement correspondent à la plage discrète de longueurs ; et dans lequel la ligne de fibre optique candidate est dimensionnée avec la longueur de travail en
sélectionnant, à partir du kit de cordons de raccordement à fibres optiques, un ou plusieurs des prolongements de fibre optique dont la connexion en série les uns avec les autres et avec le cordon de raccordement à fibres optiques de base a une longueur égale à la longueur de travail ou s'en approchant le mieux.

9. Procédé de configuration d'un système optique selon la revendication 8, dans lequel les prolongements de fibre optique dans le kit comprennent des prolongements grossiers ayant chacun une longueur grossière et des prolongements fins ayant chacun une longueur fine, de sorte que les sommes de la longueur de base, des longueurs grossières et des longueurs fines correspondent à la plage discrète de longueurs ; dans lequel
les longueurs grossières forment une série de longueurs avec une distance grossière entre une longueur grossière et la longueur grossière suivante dans la série, les longueurs fines forment une série de longueurs avec une distance fine entre une longueur fine et la longueur fine suivante dans la série, et la série de longueurs fines tombe dans ou couvre une étendue de la distance grossière ; et dans lequel la ligne de fibre optique candidate est dimensionnée avec la longueur de travail en
sélectionnant, dans le kit de cordons de raccordement à fibres optiques, l'un des prolongements grossiers dont la connexion en série avec le cordon de raccordement à fibres optiques de base a la longueur s'approchant le mieux au-dessous de la longueur de travail ; et
sélectionnant, dans le kit de cordons de raccordement à fibres optiques, l'un des prolongements fins dont la connexion en série avec le prolongement grossier précédemment sélectionné et avec le cordon de raccordement à fibres optiques de base a une longueur égale à la longueur de travail ou s'en approchant le mieux.

10. Procédé de configuration d'un système optique selon la revendication 1, dans lequel l'établissement initial de la longueur de travail comprend :
déterminer les paramètres de dispersion candidats en examinant la fibre optique du lot de fabrication de fibre optique désigné sur la base d'une technique connue quelconque visant à cet effet, et
établir initialement la longueur de travail en fonction de la longueur de référence et des paramètres de dispersion de référence et des paramètres de dispersion candidats déterminés, de préférence selon la formule suivante : $WL = RL ∗ RDP / CDP$ dans laquelle : *WL* est la longueur de travail à établir initialement ; *RL* est la longueur de référence ; *RDP* est les paramètres de dispersion de référence de premier ordre, généralement en ps/(nm·km) ; et *CDP* est les paramètres de dispersion candidats de premier ordre précédemment déterminés, généralement en ps/(nm·km).

11. Procédé de configuration d'un système optique selon l'une quelconque des revendications 1 à 10, dans lequel une application prévue du système optique nécessite une longueur minimale pour la ligne de fibre optique candidate, et la longueur de référence est la longueur minimale augmentée d'une étendue d'un intervalle de différence dans lequel une différence entre la longueur de la ligne de fibre optique candidate et la longueur de référence est estimée ou attendue comme se situant conformément à une tolérance de dispersion en usine dans la fabrication de fibre optique ; ou dans lequel
la longueur déterminée pour la ligne de fibre optique candidate est attribuée ou assignée au lot de fabrication de fibre optique désigné ou à une bobine ou à des bobines appartenant au lot de fabrication de fibre optique désigné, de sorte que
toute autre ligne de fibre optique candidate devant avoir les mêmes performances de transmission que la ligne de fibre optique candidate pour donner lieu à la satisfaction des spécifications d'impulsion prédéfinies peut être mise en œuvre soit avec
une partie de fibre optique appartenant au lot de fabrication de fibre optique désigné et dimensionnée avec la longueur attribuée au lot de fabrication de fibre optique désigné, ou avec
plusieurs parties de fibre optique appartenant au lot de fabrication de fibre optique désigné et dont la connexion les unes avec les autres en série a la longueur attribuée au lot de fabrication de fibre optique désigné.

12. Procédé de configuration d'un système optique selon la revendication 11, dans lequel le système optique comprend en outre un autre point d'extrémité connecté au générateur d'impulsions optiques normalisé par l'intermédiaire d'une autre ligne de fibre optique candidate, l'autre point d'extrémité ayant les mêmes spécifications opérationnelles de point d'extrémité que le point d'extrémité, et l'autre ligne de fibre optique candidate devant avoir les mêmes performances de transmission que la ligne de fibre optique candidate pour donner lieu à la satisfaction des spécifications d'impulsions prédéfinies ; et dans lequel
la configuration du système optique comprend en outre la mise en œuvre de l'autre ligne de fibre optique candidate soit avec une partie de fibre optique appartenant au lot de fabrication de fibre optique désigné et dimensionnée avec la longueur déterminée, soit avec plusieurs parties de fibre optique appartenant au lot de fabrication de fibre optique désigné et dont la connexion les unes avec les autres en série a la longueur déterminée.

13. Système pour configurer un système optique comprenant un générateur d'impulsions optiques normalisé et un point d'extrémité connectés l'un à l'autre par une ligne de fibre optique candidate appartenant à un lot de fabrication de fibre optique désigné, la ligne de fibre optique candidate ayant des paramètres de dispersion candidats ; dans lequel :
une ligne de fibre optique de référence est connue pour donner lieu à ou faire en sorte que les impulsions optiques générées par le générateur d'impulsions optiques normalisé et transmises sur la ligne de fibre optique de référence atteignent le point d'extrémité satisfaisant les spécifications d'impulsions prédéfinies requises par le point d'extrémité pour fonctionner correctement, la ligne de fibre optique de référence ayant des paramètres de dispersion de référence et une longueur de référence ; dans lequel
la dispersion optique de tout chemin de fibre optique dépend de ses paramètres de dispersion dont les effets s'accumulent sur sa longueur, lesdits paramètres de dispersion étant variables dans la plage de tolérance de fabrication en raison d'imperfections de fabrication inévitables et, par conséquent, en fonction du lot de fabrication de fibre optique auquel appartient ledit chemin de fibre optique, ladite variabilité donnant potentiellement lieu à la non-satisfaction des spécifications d'impulsion prédéfinies ; et dans lequel le système comprend :
un kit d'outils de détermination configuré pour déterminer, par un opérateur du système, une longueur pour la ligne de fibre optique candidate qui donne lieu à ou fait en sorte que des impulsions optiques générées par le générateur d'impulsions optiques normalisé et transmises sur la ligne de fibre optique candidate atteignent le point d'extrémité satisfaisant les spécifications d'impulsions prédéfinies ; et
un kit d'outils de configuration pour configurer, par l'opérateur du système, le système optique en mettant en œuvre la ligne de fibre optique candidate soit avec un segment de fibre optique appartenant au lot de fabrication de fibre optique désigné et dimensionné avec la longueur déterminée, soit avec plusieurs segments de fibre optique appartenant au lot de fabrication de fibre optique désigné et dont la connexion entre eux en série a la longueur déterminée ;
dans lequel la détermination de la longueur pour la ligne de fibre optique candidate comprend :
- déterminer les paramètres de dispersion candidats en examinant la fibre optique à partir du lot de fabrication de fibre optique désigné sur la base d'une technique connue quelconque visant à cet effet, et
- calculer la longueur de la ligne de fibre optique candidate en fonction de la longueur de référence et des paramètres de dispersion de référence et des paramètres de dispersion candidats déterminés, de préférence selon la formule suivante : $CL = RL ∗ RDP / CDP$ dans lequel: *CL* est la longueur à calculer pour la ligne de fibre optique candidate, ou simplement la longueur candidate ; *RL* est la longueur de référence ; *RDP* est les paramètres de dispersion de référence de premier ordre, généralement en ps/(nm·km) ; et *CDP* est les paramètres de dispersion candidats de premier ordre précédemment déterminés, généralement en ps/(nm·km) ;
ou comprend :
- établir initialement une longueur de travail dans une plage discrète de longueurs autour de la longueur de référence ; et
- ajuster la longueur de travail en la faisant varier dans la plage discrète de longueurs jusqu'à ce qu'il soit vérifié que les impulsions optiques générées par le générateur d'impulsions optiques normalisé et transmises sur la ligne de fibre optique candidate dimensionnée avec la longueur de travail atteignent le point d'extrémité satisfaisant les spécifications d'impulsions prédéfinies, lesdites spécifications d'impulsions prédéfinies comprenant de préférence des spécifications de référence sur la durée d'impulsion ou la forme d'impulsion ou la puissance d'impulsion ou le spectre optique ou une combinaison quelconque de ceux-ci.
